(19) Europäisches Patentamt / European Patent Office / Office européen des brevets

(11) **EP 4 322 651 A1**

(12) **EUROPEAN PATENT APPLICATION**
published in accordance with Art. 153(4) EPC

(43) Date of publication:
**14.02.2024 Bulletin 2024/07**

(21) Application number: **21935951.0**

(22) Date of filing: **05.04.2021**

(51) International Patent Classification (IPC):
**H04W 72/04** (2023.01)

(52) Cooperative Patent Classification (CPC):
**H04W 72/04**

(86) International application number:
**PCT/JP2021/014551**

(87) International publication number:
**WO 2022/215143 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes: a control section that generates a channel state information reference signal (CSI-RS) sequence among a plurality of CSI-RS sequences; and a receiving section that receives a CSI-RS by using the CSI-RS sequence. The plurality of CSI-RS sequences correspond to a plurality of respective CSI-RS ports or a plurality of respective code division multiplexing (CDM) groups. According to one aspect of the present disclosure, accuracy in measurement of a CSI-RS can be increased.

FIG. 9A

CSI-RS SEQUENCE OF CSI-RS PORT #1 :   $[r\_1\_1, r\_1\_2, r\_1\_3, \ldots , r\_1\_12]$   ← GENERATED FROM SCRAMBLING ID #1

CSI-RS SEQUENCE OF CSI-RS PORT #2 :   $[r\_2\_1, r\_2\_2, r\_2\_3, \ldots , r\_2\_12]$   ← GENERATED FROM SCRAMBLING ID #2

...

CSI-RS SEQUENCE OF CSI-RS PORT #12 :   $[r\_12\_1, r\_12\_2, r\_12\_3, \ldots , r\_12\_12]$   ← GENERATED FROM SCRAMBLING ID #12

EP 4 322 651 A1

## FIG. 9B

$k_0=0$, $k_1=4$, $k_2=8$, $l_0=3$

CDM GROUP #2

CDM GROUP #1

CDM GROUP #0

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In Existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), it is studied that a plurality of channel state information (CSI)-reference signals (RSs) are multiplexed to each other by using at least one of time division multiplexing (TDM), and frequency division multiplexing (FDM), code division multiplexing (CDM) and transmitted by using a plurality of respective CSI-RS ports.

However, it is conceivable that accuracy in measurement (estimation, tracking) decreases due to interference of a plurality of CSI-RSs transmitted in the same resource element (RE). If the accuracy in measurement of a CSI-RS decreases, system performance may degrade.

Thus, an object of the present disclosure is to provide a terminal, a radio communication method, and a base station that increases accuracy in measurement of a CSI-RS.

Solution to Problem

A terminal according to one aspect of the present disclosure includes: a control section that generates a channel state information reference signal (CSI-RS) sequence among a plurality of CSI-RS sequences; and a receiving section that receives a CSI-RS by using the CSI-RS sequence. The plurality of CSI-RS sequences correspond to a plurality of respective CSI-RS ports or a plurality of respective code division multiplexing (CDM) groups.

Advantageous Effects of Invention

According to one aspect of the present disclosure, accuracy in measurement of a CSI-RS can be increased.

Brief Description of Drawings

[FIG. 1] FIG. 1 is a diagram to show an example of existing slots and CSI-RS locations in RBs.

[FIG. 2] FIGS. 2A to 2D are diagrams to show examples of an FD-OCC and a TD-OCC.

[FIG. 3] FIG. 3 is a diagram to show an example of a CSI-RS location for each number of ports.

[FIG. 4] FIG. 4 is a diagram to show an example of mapping of CSI-RSs in a case of 32 ports.

[FIG. 5] FIG. 5 is a diagram to show an example of CDM groups.

[FIG. 6] FIG. 6 is a diagram to show an example of slots and CSI-RS locations in RBs.

[FIG. 7] FIGS. 7A and 7B are diagrams to show examples of an association between PN sequence samples and CDM groups.

[FIG. 8] FIGS. 8A and 8B are diagrams to show an example of CSI-RS sequences.

[FIG. 9] FIGS. 9A and 9B are diagrams to show an example of CSI-RS sequences based on Option 1.

[FIG. 10] FIGS. 10A and 10B are diagrams to show examples of CSI-RS sequences based on multi-sequence generation method 1.

[FIG. 11] FIG. 11 is a diagram to show an example of CSI-RS sequences based on multi-sequence generation method 2.

[FIG. 12] FIG. 12 is a diagram to show an example of a schematic structure of a radio communication system according to one embodiment.

[FIG. 13] FIG. 13 is a diagram to show an example of a structure of a base station according to one embodiment.

[FIG. 14] FIG. 14 is a diagram to show an example of a structure of a user terminal according to one embodiment.

[FIG. 15] FIG. 15 is a diagram to show an example of a hardware structure of the base station and the user terminal according to one embodiment.

Description of Embodiments

(CSI-RS)

In Rel. 15, CSI-RSs of a plurality of ports are multiplexed by using at least one of frequency division multiplexing (FDM), time division multiplexing (TDM), and code division multiplexing (CDM (frequency domain OCC, time domain OCC)). A CSI-RS supports 32 ports at maximum.

The CSI-RSs of the plurality of ports are used for orthogonalization of multi-input multi-output (MIMO) layers, for example. For example, for single-user MIMO, a different DMRS port is configured for each layer. For multi-user MIMO, a different DMRS port is configured for each layer per UE and for each UE.

In Rel. 15, CSI-RSs supports 32 ports at maximum by at least one of a time domain OCC and a frequency domain OCC (four at maximum in the time direction, two at maximum in the frequency direction), FDM, and TDM.

In Rel. 15, a CSI-RS is used as a DL RS for at least one of channel state information (CSI) acquisition, beam management (BM), beam failure recovery (BFR), and fine tracking of time and frequency, for example. The CSI-RSs support, one, two, four, eight, 12, 16, 24, and 32 ports (antenna ports, CSI-RS ports). The CSI-RSs support periodic, semi-persistent, aperiodic transmission. To adjust overhead and CSI estimation accuracy, frequency density for CSI-RSs can be configured.

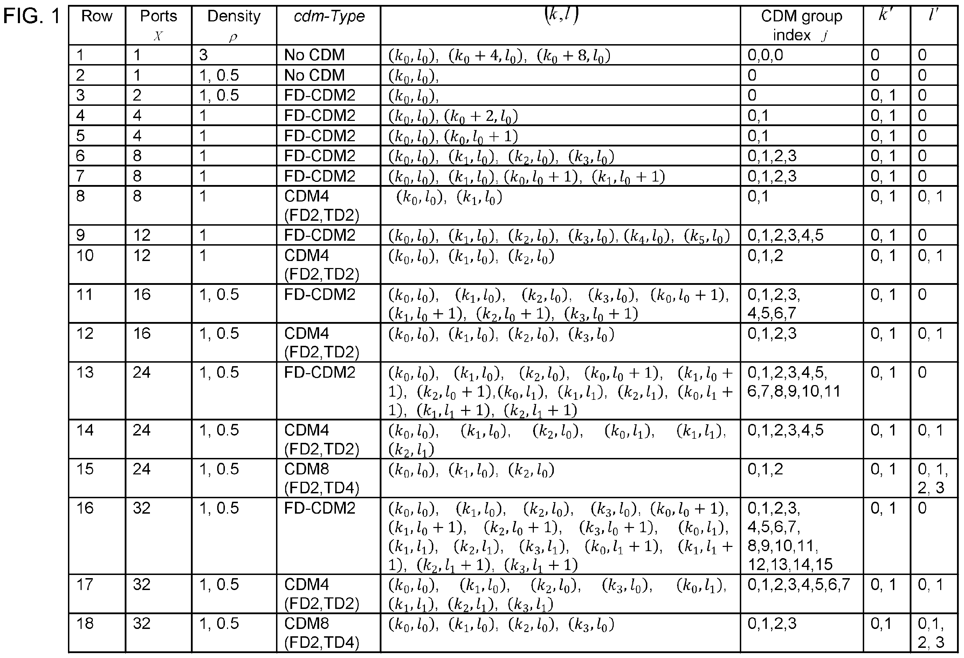

FIG. 1 is a diagram to show an example of CSI-RS locations in slots. Each row of the table shows row number, the number of ports, the density of frequency domain, CDM type, time and frequency (time/frequency) location (component resource (CDM group) location (k bar, 1 bar)), CDM group index, and each resource location in a component resource ((RE, symbol), (k', l')). Here, the time/frequency location is the location of time and frequency resource (component resource) of a CSI-RS corresponding to one port. k bar is an expression of "k" with an overline. k bar indicates a start resource element (RE) index of a component resource, and 1 bar indicates a start symbol (OFDM symbol) index of the component resource.

Examples of the CDM group include no CDM (without CDM, N/A), FD-CDM2, CDM4, and CDM8. In FD-CDM2, a frequency domain (FD)-orthogonal cover code (OCC) with a length of 2 is multiplied in units of RE to multiplex CSI-RSs of two ports in the same time and frequency (FD2). In CDM4, an FD-OCC with a length of 2 and a time domain (TD)-OCC with a length of 2 are multiplied in units of RE and units of symbol to multiplex CSI-RSs of four ports in the same time and frequency (FD2TD2). In CDM8, an FD-OCC with a length of 2 and a TD-OCC with a length of 4 are multiplied in units of RE and units of symbol to multiplex CSI-RSs of eight ports in the same time and frequency (FD2TD4).

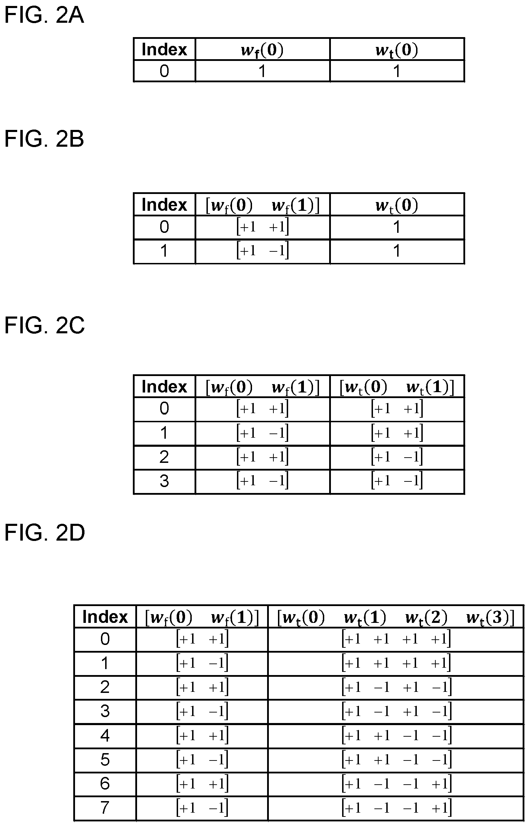

FIGS. 2A to 2D are diagrams to show examples of an FD-OCC and a TD-OCC. An FD-OCC sequence is expressed as $w_f(k')$, and a TD-OCC sequence is expressed as $w_t(k')$. FIG. 2A shows a case where the CDM type is no CDM. FIG. 2B shows a case where the CDM type is FD-CDM2. FIG. 2C shows a case where the CDM type is CDM4. FIG. 2D shows a case where the CDM type is CDM8.

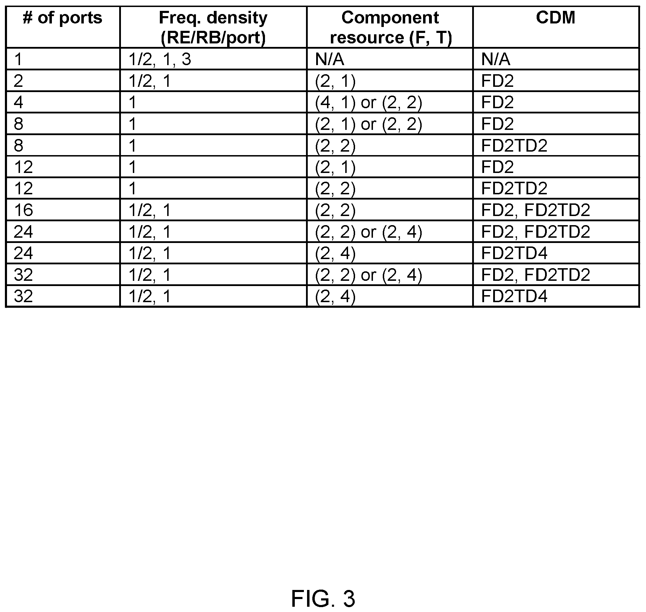

FIG. 3 is a diagram to show an example of a CSI-RS location for each number of ports based on FIG. 1. In this drawing, frequency density, component resource size (frequency-direction size [RE], time-direction size [symbol]), and CDM type are shown for each number of ports.

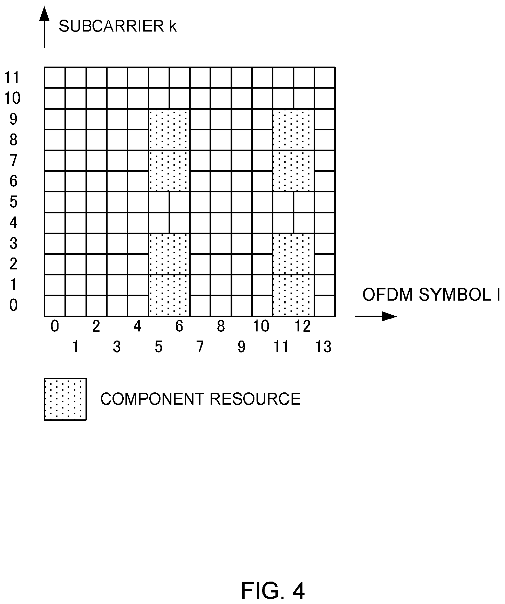

For example, FIG. 4 shows an example of CSI-RS resource element (RE) mapping in a case where the number of ports is configured as 32 and the component resource size is configured as two subcarriers x two symbols (row index 17 in FIG. 1). In the frequency domain and the time domain of one physical resource block (PRB) x one slot, four component resources of two subcarriers x two symbols are multiplexed in the frequency domain (frequency division multiplexed (FDMed)), and two component resources are multiplexed in the time domain (time division multiplexed (TDMed)), to thereby map 4 x 2 component resources. Moreover, by multiplying CSI-RSs in each component resource by an FD-OCC with a length of two subcarriers and a TD-OCC with a length of two symbols, four CSI-RSs are multiplexed (code division multiplexed (CDMed)) (CDM4, FD2TD2). Hence, CSI-RSs of 32 ports are transmitted in resources of one PRB x one slot.

The UE assumes that all the CSI-RS resources of a resource set are configured to have the same start RB, the same number of RBs, and the same CDM type.

In NR, an NZP-CSI-RS is used for time/frequency tracking, CSI calculation, L1-RSRP/SINR calculation, and mobility.

Generation of a sequence for NZP-CSI-RS is based on a pseudo-random (pseudo-noise (PN)) sequence defined by the following equation.

[Math. 1]

Equation (1)

$$r(m) = \frac{1}{\sqrt{2}}\left(1 - 2 \cdot c(2m)\right) + j\frac{1}{\sqrt{2}}\left(1 - 2 \cdot c(2m+1)\right)$$

c(n) is defined by the following.

[Math. 2]

Equations (2)

$$c(n) = \left(x_1(n + N_C) + x_2(n + N_C)\right)\mathrm{mod}\,2$$
$$x_1(n + 31) = \left(x_1(n + 3) + x_1(n)\right)\mathrm{mod}\,2$$
$$x_2(n + 31) = \left(x_2(n + 3) + x_2(n + 2) + x_2(n + 1) + x_2(n)\right)\mathrm{mod}\,2$$

$$c_{\mathrm{init}} = \sum_{i=0}^{30} x_2(i) \cdot 2^i$$

$N_C$ is $N_C = 1600$. A 1m-th sequence $x_1(n)$ is initialized by x1(0) = 1, x1(n) = 0, n = 1, 2, ..., 30. A 2m-th sequence $x_2(n)$ is initialized by $c_{\mathrm{init}}$. $c_{\mathrm{init}}$ varies depending on the application destination of a sequence. A pseudo-random sequence generator for a CSI-RS sequence r(m) is initialized by $c_{\mathrm{init}}$ according to the following equation at each start of OFDM symbols.

[Math. 3]

Equation (3)

$$c_{\mathrm{init}} = \left(2^{10}\left(N_{\mathrm{symb}}^{\mathrm{slot}}n_{\mathrm{s,f}}^{\mu} + l + 1\right)(2n_{\mathrm{ID}} + 1) + n_{\mathrm{ID}}\right)\mathrm{mod}\,2^{31}$$

$n_{\mathrm{s,f}}^{\mu}$ denotes a slot number in a radio frame. 1 denotes an OFDM symbol number in a slot. $n_{\mathrm{ID}}$ is equal to a scrambling ID parameter (higher layer parameter scramblingID) or a sequence generation configuration parameter (higher layer parameter sequenceGenerationConfig). $n_{\mathrm{symb}}^{\mathrm{slot}}$ denotes the number of symbols per slot.

When a condition is satisfied for each configured CSI-RS, the UE assumes that the sequence r(m) is mapped to a resource element (RE) (k, l)$_{\mathrm{p,\mu}}$ according to the following equations.

[Math. 4]

Equation (4)

$$a_{k,l}^{(p,\mu)} = \beta_{CSIRS} w_f(k') \cdot w_t(l') \cdot r_{l,n_{s,f}}(m')$$

$$m' = \lfloor n\alpha \rfloor + k' + \left\lfloor \frac{\bar{k}\rho}{N_{sc}^{RB}} \right\rfloor$$

$$k = nN_{sc}^{RB} + \bar{k} + k'$$

$$l = \bar{l} + l'$$

$$\alpha = \begin{cases} \rho & \text{for } X = 1 \\ 2\rho & \text{for } X > 1 \end{cases}$$

$$n = 0,1,\ldots$$

The condition is that the resource element $(k, l)_{p,\mu}$ is within a resource block occupied by CSI-RS resources for which the UE is configured. A reference point for k = 0 is subcarrier 0 in common resource block 0. $\rho$ is given by a higher layer parameter density in a CSI-RS-ResourceMapping information element (IE) or CSI-RS-CellMobility IE. The number X of ports is given by a higher layer parameter nrofPorts. k denotes the index (location) of the frequency domain (subcarrier) for the reference point. 1 denotes the index (location) of the time domain (symbol) for the reference point. p denotes an antenna port index. $\mu$ denotes a subcarrier spacing configuration.

For an NZP-CSI-RS, the UE assumes that $\beta_{CSIRS} > 0$ is satisfied. $\beta_{CSIRS}$ denotes a power offset specified by a higher layer parameter powerControlOffsetSS in an NZP-CSI-RS-Resource IE if provided. $w_f(k')$ denotes an FD-OCC associated with a CDM group. $w_t(l')$ denotes a TD-OCC associated with the CDM group. $r_{l,ns,f\mu}(m')$ denotes a PN sequence initialized at the symbol 1 in slot $n_{s,f}^\mu$. k' denotes a subcarrier index of an RE in the CDM group. l' denotes a symbol index of the RE in the CDM group. $N_{sc}^{RB}$ denotes the number of subcarriers per RB.

The RE locations of CSI-RSs are in common among a plurality of cells. In general, by assuming that that interference of CSI-RSs among cells is low, CSI-RSs are mapped to the same RE among a plurality of cells. Since the length of a PN sequence used for a CSI-RS is finite, PN sequences generated by a plurality of respective different scrambling IDs are not completely orthogonal to each other (are not orthogonal sequences or are pseudo-orthogonal sequences or non-completely orthogonal sequences). Hence, even when a different scrambling ID is configured for each cell, inter-CSI-RS-sequence interference (inter-cell interference) increases, which may cause inter-cell interference in some cases.

When the band of a CSI-RS to be measured by the UE is sufficiently wide, PN sequences are long, and the probability that different PN sequences are used among the plurality of cells is high. When the band of a CSI-RS to be measured by the UE is narrow, PN sequences are long, and the probability that different PN sequences are used among the plurality of cells is low.

Generated PN sequences are in common among all the ports.

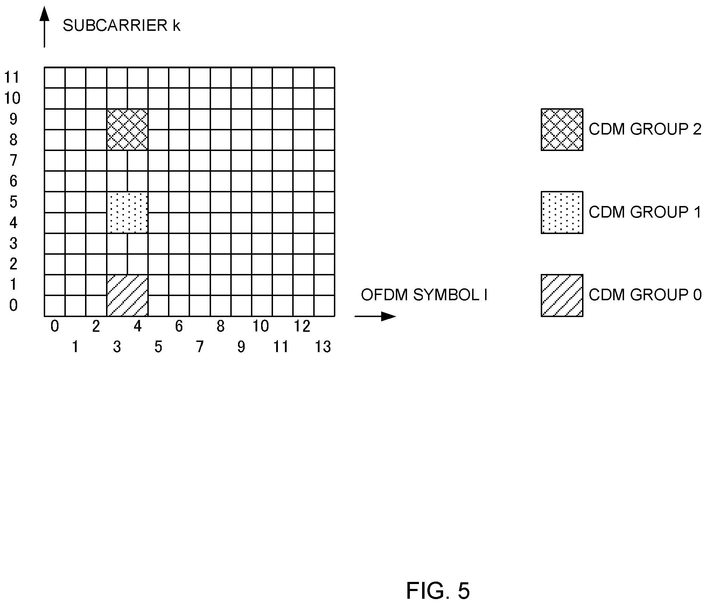

Assume 12 CSI-RS ports. In a case where row is 12, ko = 0, ki = 4, $k_2$ = 8, $l_0$ = 3 in FIG. 1, CDM groups #0, #1, and #2 as those in FIG. 5 are used. In this case, all the 12 ports use the following two PN sequences $r_{l,ns,f\mu}(m')$.

- PN sequence $r_{3,ns,f\mu}(m')$ for the third OFDM symbol is $[r_3(0), r_3(1), \ldots]$.
- PN sequence $r_{4,ns,f\mu}(m')$ for the fourth OFDM symbol is $[r_4(0), r_4(1), \ldots]$.

For the ports in each CDM group, different samples are selected from these PN sequences. For example, $[r_3(0), r_3(4), r_4(1), r_4(9)]$ are selected for CDM group #0, and $[r_3(1), r_3(5), r_4(0), r_4(10)]$ are selected for CDM group #1.

Since all the ports use the same PN sequences, there is a possibility that adjacent cells use the same PN sequences. In this case, the accuracy of channel estimation based on a CSI-RS decreases.

For example, when CSI-RSs of eight ports are used, the PN sequence length is 8. When the bandwidth used for CSI-RS measurement (calculation of CSI such as a precoding matrix indicator (PMI)) is one PRB, the number of patterns of the sequence with a length of 8 having {0, 1} as an element is only 256. Hence, the same PN sequence (CSI-RS sequence) may be generated using different scrambling IDs / cell IDs / physical cell IDs (PCIs) in some cases. When the PN sequences are short, the possibility that highly correlated sequences are used among the plurality of cells is high even if the same PN sequence is not generated among the plurality of cells.

In existing specifications, a bandwidth to be used for measurement of a CSI-RS is not defined. The UE can assume that a CSI-RS is measured in a narrow band for reduction of processing load.

When a specific cell ID is configured and a signal-to-interference ratio (SIR) is low (for example, when the level of reception from a cell causing interference is equivalent to that of a signal cell), the UE may erroneously measure and report the PMI of the cell causing the interference in some cases. In this way, when a CSI-RS for PMI measurement has a high correlation among a plurality of cells, it is conceivable that the UE confuses a CSI-RS of the serving cell of the UE and a CSI-RS of another cell, for measurement.

It is conceivable that measurement accuracy decreases due to interference of a plurality of CSI-RS sequences transmitted in the same RE as described above. If the accuracy in measurement of a CSI-RS decreases, communication quality may decrease, and system performance may degrade.

Thus, the inventors of the present invention came up with the idea of a method for reducing interference among a plurality of CSI-RSs transmitted in the same time/frequency resource.

Embodiments according to the present disclosure will be described in detail with reference to the drawings as follows. The radio communication methods according to respective embodiments may each be employed individually, or may be employed in combination of at least two.

In the present disclosure, "A/B" and "at least one of A and B" may be interchangeably interpreted. In the present disclosure, a cell, a component carrier (CC), a carrier, a bandwidth part (BWP), and a band may be interchangeably interpreted. In the present disclosure, an index, an ID, an indicator, and a resource ID may be interchangeably interpreted. In the present disclosure, an RRC parameter, a higher layer parameter, an RRC information element (IE), and an RRC message may be interchangeably interpreted.

In the present disclosure, a port, a CSI-RS port, and an antenna port may be interchangeably interpreted. In the present disclosure, a CSI-RS resource, a CSI-RS configuration, and a time and frequency resource for a CSI-RS may be interchangeably interpreted.

(Radio Communication Method)

In the present disclosure, a scrambling ID, scramblingID, a sequence generation configuration, sequenceGenerationConfig, a cell ID, a pseudo-cell ID, a virtual cell ID, and nID may be interchangeably interpreted.

In the present disclosure, a resource, a CDM group, a CSI-RS port, a cell, a parameter, and an index may be interchangeably interpreted.

In the present disclosure, a CDM group may be a plurality of CSI-RS resources orthogonalized by at least one of a time domain OCC and a frequency domain OCC in the same RE.

In the present disclosure, measurement, estimation, calculation, CSI calculation, tracking, L1-RSRP/SINR calculation, mobility, and channel estimation may be interchangeably interpreted.

In the present disclosure, a CSI-RS sequence, a PN sequence, a pseudo-random sequence, and a pseudo-orthogonal sequence may be interchangeably interpreted.

In the present disclosure, a CSI-RS port and a base station antenna port that transmits a CSI-RS may be interchangeably interpreted.

A base station may perform operation of generation/mapping of a sequence for transmission of a CSI-RS, and a UE may perform the same operation for reception of the CSI-RS. The UE may generate, for CSI-RS reception, the same sequence as a sequence used by the base station for CSI-RS transmission. The UE may determine, for the CSI-RS reception, the same resource (RE) as a resource (RE) used by the base station for the CSI-RS transmission.

The UE may measure a CSI-RS to which at least one of the following embodiments is applied.

<Embodiment 1>

For a plurality of resources, resource-specific PN sequences may be generated. Different PN sequences may be generated among the plurality of resources.

Different scrambling IDs may be assigned to the plurality of resources. With these scrambling IDs, resource-specific $c_{init}$ may be determined, and resource-specific PN sequences may be generated.

<<Embodiment 1-1>>

For a CDM group, a CDM-group-specific PN sequence may be generated. Different PN sequences may be generated among a plurality of CDM groups.

The UE may receive a CDM-group-specific configuration of a scrambling ID. The UE may receive information related to a scrambling ID for each CDM group.

Different scrambling IDs may be assigned to the plurality of CDM groups. With these scrambling IDs, CDM-

group-specific $c_{init}$ may be determined, and CDM-group-specific PN sequences may be generated.

The UE may determine a scrambling ID for a CSI-RS sequence in accordance with any of scrambling ID determination methods 1 and 2 below.

{Scrambling ID Determination Method 1}

Scrambling ID information (scramblingID) for each CDM group (CDM-group-specific configuration of a scrambling ID) may be configured by an RRC parameter.

{Scrambling ID Determination Method 2}

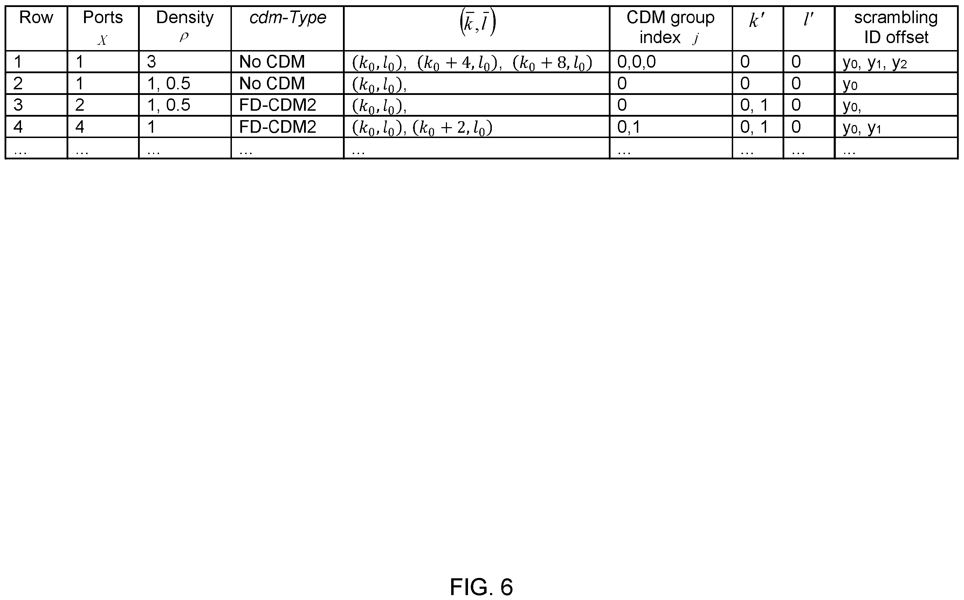

The UE may identify the scrambling ID specific to each CDM group, based on scrambling ID information (scramblingID) given to a CSI-RS resource and a specific parameter x. For example, as shown in FIG. 6, a scrambling ID offset $y_i$ may be added to the table in FIG. 1. The specific parameter x may be the number of ports. The scrambling ID offset $y_i$ may be associated with CDM group i. The UE may specify the scrambling ID offset $y_i$ for each CDM group, based on the specific parameter x and add $y_i$ to the configured scrambling ID information, to thereby determine a scrambling ID specific to the CDM group.

In this way, the probability that a CSI-RS sequence having a high correlation with a CSI-RS sequence of an adjacent cell among the plurality of CDM groups can be reduced. In addition, the probability that a CSI-RS sequence having a low correlation with a CSI-RS sequence of an adjacent cell can be increased in at least part of the CSI-RS ports.

<<Embodiment 1-2>>

For each CSI-RS port (antenna port), a PN sequence of the CSI-RS port may be generated. Different PN sequences may be generated among a plurality of CSI-RS ports.

The UE may receive a CSI-RS-port-specific configuration of a scrambling ID. The UE may receive information related to a scrambling ID for each CSI-RS port.

Different scrambling IDs may be assigned to the plurality of CSI-RS ports. With these scrambling IDs, CSI-RS-port-specific $c_{init}$ may be determined, and CSI-RS-port-specific PN sequences may be generated.

The UE may determine a scrambling ID for a CSI-RS sequence in accordance with any of scrambling ID determination methods 1 and 2 below.

{Scrambling ID Determination Method 1}

Scrambling ID information (scramblingID) for each CSI-RS port (CSI-RS-port-specific configuration of a scrambling ID) may be configured by an RRC parameter.

{Scrambling ID Determination Method 2}

The UE may identify the scrambling ID specific to each CSI-RS port, based on scrambling ID information (scramblingID) given to a CSI-RS resource and a specific parameter x. For example, a scrambling ID offset $y_i$ may be added to the table in FIG. 1. The specific parameter x may be the number of ports. The scrambling ID offset $y_i$ may be associated with CSI-RS port i. The UE may specify the scrambling ID offset $y_i$ for each CSI-RS port, based on the specific parameter x and add $y_i$ to the configured scrambling ID information, to thereby determine a scrambling ID specific to the CSI-RS port.

In this way, the probability that a CSI-RS sequence having a high correlation with a CSI-RS sequence of an adjacent cell among all the CSI-RS ports (for example, 32 ports) can be reduced. In addition, the probability that a CSI-RS sequence having a low correlation with a CSI-RS sequence of an adjacent cell can be increased in at least part of the CSI-RS ports.

<Embodiment 2>

In a CSI-RS design in existing NR, all the cells use the same time/frequency resource for CSI-RSs. This may cause a situation that a plurality of cells use samples of the same index from generated PN sequences. For example, cell i and cell j use samples of the same index for CDM group 2. Cell i selects $[r_3^i(0), r_3^i(4), r_4^i(1), r_4^i(9)]$ for CDM group 2, and cell j selects $[r_3^j(0), r_3^j(4), r_4^j(1), r_4^j(9)]$ for CDM group 2. In this case, cells i and j use the same PN sequence, which increases inter-cell interference.

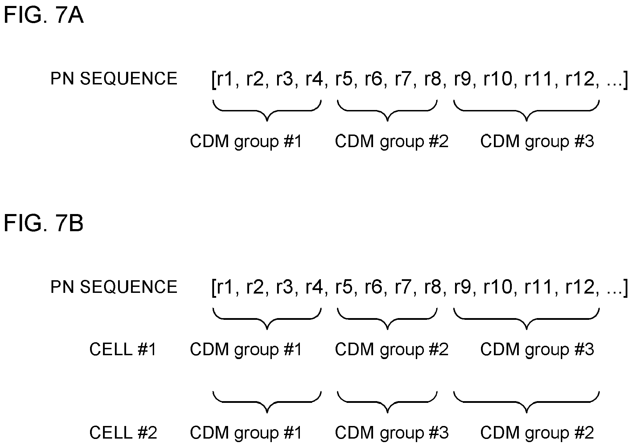

In existing NR, an association between PN sequence sample indices and CDM groups is in common among all the cells as shown in FIG. 7A, for example.

As shown in FIG. 7B, the association between PN sequence sample indices and CDM groups may be different among a plurality of cells. This association may be defined in a specification or may be configured by an RRC parameter. PN sequence sample indices associated with one CDM group may be contiguous or may be non-contiguous (may be at regular intervals).

An association between PN sequence sample indices and CSI-RS ports may be different among the plurality of cells. This association may be defined in a specification or may be configured by an RRC parameter. PN sequence sample indices associated with one CSI-RS port may be contiguous or may be non-contiguous (may be at regular intervals).

Mapping of PN sequence sample indices to REs may be different among the plurality of cells. This mapping may be defined in a specification or may be configured by an RRC parameter.

The plurality of cells may use samples of different indices from PN sequences.

A cell-specific value $f(x_{cell})$ may be added to a PN sequence sample index m'. For example, the PN sequence sample index m' may be expressed by the following equation.

[Math. 5]

$$\text{Equation (5)}$$

$$m' = \lfloor n\alpha \rfloor + k' + \left\lfloor \frac{\bar{k}\rho}{N_{sc}^{RB}} \right\rfloor + f(x_{cell})$$

$f(x_{cell})$ may denote a scrambling ID.

$f(x_{cell})$ may denote a CSI-RS port index.

$f(x_{cell})$ may denote a CDM group index of a CSI-RS.

According to Embodiment 2 above, even when the same PN sequence is used among a plurality of cells, interference can be reduced by using different samples of the PN sequence.

<Embodiment 3>

A plurality of scrambling IDs may be configured by an RRC parameter. The number of scrambling IDs may be two or a different number. The plurality of scrambling IDs may be a scrambling ID list.

One of the plurality of configured scrambling IDs may be indicated (switched) based on an A-CSI-RS or downlink control information (DCI) that triggers A-CSI reporting.

The indication of the scrambling ID based on the DCI may be a new field added in a new release, may be an interpretation (understanding) of an existing field, or may be implicit indication. The implicit indication may be based on at least one of the first control channel element (CCE) index, a first PRB index, and a first RE index of a PDCCH carrying the DCI.

When a plurality of scrambling IDs (a certain number of scrambling IDs) are configured for a CSI-RS resource, the UE may assume that a new field is present. Otherwise, the UE may assume that no new field is present (new field size is 0 bit).

A plurality of scrambling IDs may be configured for a plurality of respective resources. The UE may determine one scrambling ID for each resource, based on DCI. The UE may determine different scrambling IDs for the plurality of resources according to Embodiment 1. A plurality of scrambling IDs may be configured for each CDM group. A plurality of scrambling IDs may be configured for each CSI-RS port.

According to Embodiment 3 above, scrambling IDs can be changed dynamically, and hence CSI-RS sequences can be changed according to the state of interference.

<Embodiment 4>

<<Premise>>

In existing specifications (Rel. 15/16), scrambling IDs for generation of a PN sequence for CSI-RSs are cell specific.

A base station / UE generates a cell-specific PN sequence and maps corresponding elements among elements in the generated PN sequence, to REs allocated to CSI-RSs.

For example, the base station / UE generates [r1, r2, r3, r4, r5, r6, ...] as a PN sequence and maps a corresponding part of the PN sequence to each RE in accordance with a rule defined in a specification. For example, in a case of 12 CSI-RS ports, a necessary PN sequence length is 12. Instead of 12 values of the PN sequence being generated and mapped in a contiguous manner, a PN sequence longer than 12 points is generated, and each element of the PN sequence corresponds to the location (subcarrier index k and symbol index 1) of the RE allocated to each CSI-RS. A corresponding element of the PN sequence is mapped only to each RE to be transmitted in actual. In other words, contiguous elements in the PN sequence are not necessarily mapped, and non-contiguous elements are used/transmitted in actual.

In the present disclosure, a PN sequence [r1, r2, r3, r4, r5, r6, ...] is used for description for simplicity, but the element indices of the PN sequence may be element indices obtained by re-numbering only elements to be transmitted in actual, or elements indices of a generated PN sequence may be used.

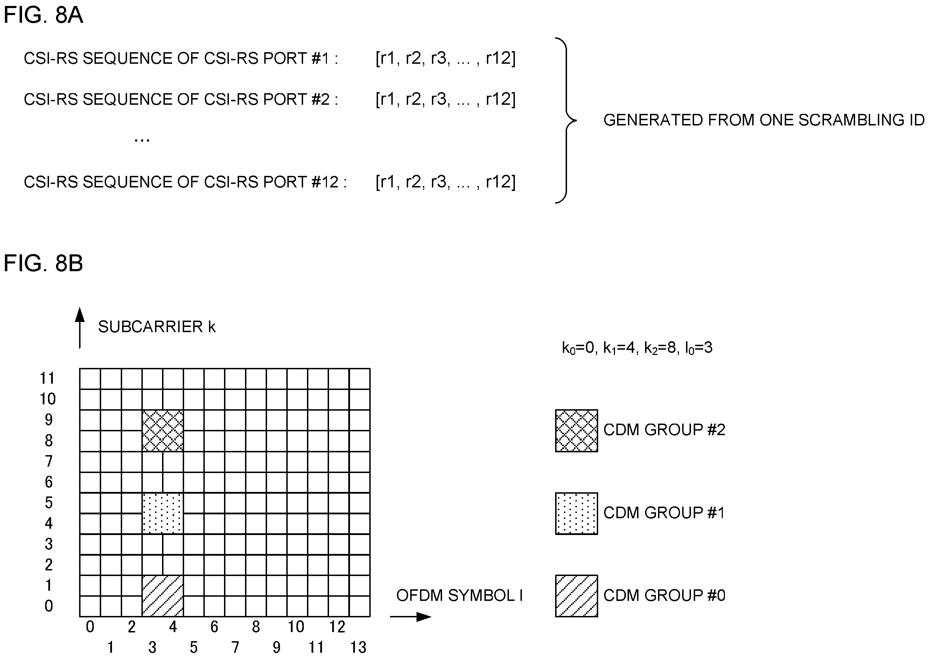

FIG. 8A is a diagram to show an example of CSI-RS sequences. In this example, a CSI-RS sequence [r1, r2, r3, r4, r5, r6, ...] transmitted from each base station antenna port (each of CSI-RS ports #1 to #12) is the same in one cell irrespective of CSI-RS port. In this case, as in the example in FIG. 8B, a base station/UE maps 12 elements of the CSI-RS sequence to 12 respective REs allocated to CSI-RSs.

<<Aspects>>

A configuration of scrambling IDs may follow any of Options 1 and 2 below.

{Option 1} CSI-RS-port-specific configuration of scrambling IDs

(Embodiment 1-2)

{Option 2} CDM-group-specific configuration of scrambling IDs

(Embodiment 1-1)

When all the ports in one CDM group have the same sequence, covariance matrix is not diagonal, which leaves several problems. In view of this, Option 1, which guarantees that the covariance matrix is diagonal and erroneous PMI measurement at a low SIR is avoided, is preferable.

In Option 1, the base station configures a plurality of scrambling IDs. For example, the base station configures 12 scrambling IDs for 12 CSI-RS ports. Selection/determination of the plurality of scrambling IDs for the plurality of respective CSI-RS ports may follow any of selection methods 1 and 2 below.

{Selection Method 1}

As long as the plurality of different scrambling IDs are selected for the plurality of respective CSI-RS ports, the plurality of scrambling IDs may be selected randomly.

{Selection Method 2}

The plurality of scrambling IDs are not selected randomly. The base station may select a combination of a plurality of scrambling IDs for the plurality of CSI-RSs to be able to obtain gain.

In selection method 1, when the plurality of scrambling IDs are random over an interval at which the UE performs averaging of measurement results, the problem of interference among a plurality of cells is less likely to occur.

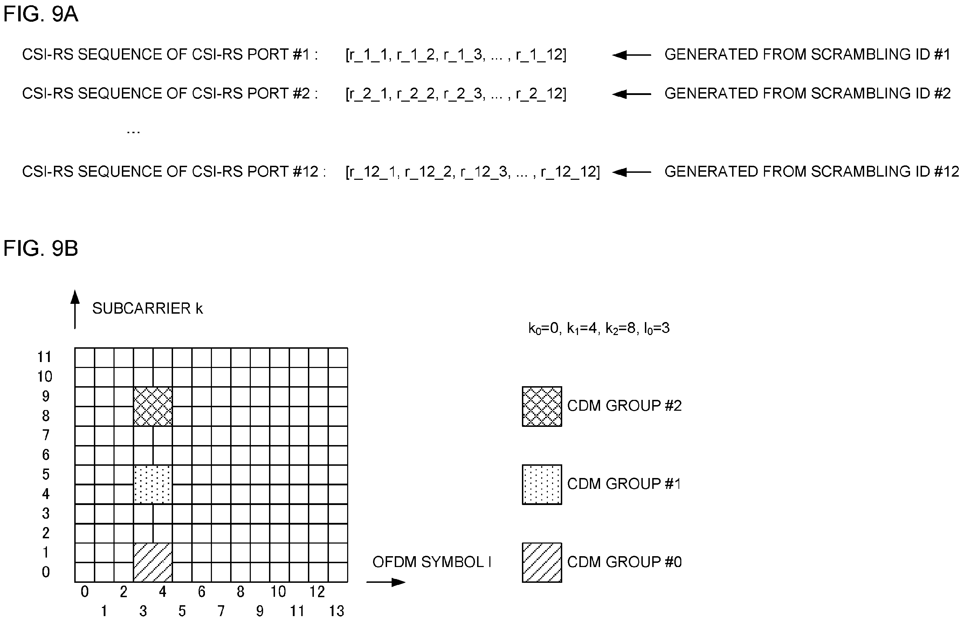

FIG. 9A is a diagram to show an example of CSI-RS sequences based on Option 1. In this example, a CSI-RS sequence transmitted from each base station antenna port (each of CSI-RS ports #1 to #12) is CSI-RS-port-specific (is different depending on CSI-RS port) for one cell. In this case, as in the example in FIG. 9B, the base station/UE maps 12 elements of the CSI-RS sequence to 12 respective REs allocated to each

CSI-RS.

In Option 1, the base station / UE need generate sequences corresponding to the number of CSI-RS ports. In Option 2, the base station / UE need generate sequences corresponding to the number of CDM groups. In Options 1 and 2, processing load of the terminal (for example, calculation processing load, storage/memory) increases.

According to this embodiment, it is possible to suppress interference among a plurality of cells and improve accuracy in CSI measurement.

<Embodiment 5>

The base station / UE generates a plurality of sequences from one specific sequence. The specific sequence may be a PN sequence or may be a low peak to average ratio (PAPR) sequence. The low PAPR sequence may be defined by cyclic shift of a base sequence. The base sequence may be defined in a specification or may be a Zadoff-Chu sequence.

The base station / UE may generate one specific sequence, based on one scrambling ID / cell ID / PCI and generate a plurality of sequences from the sequence.

<<Multi-sequence Generation Method 1»

By selecting a plurality of different parts of the specific sequence, the base station / UE may generate a plurality of CSI-RS sequences. The plurality of CSI-RS sequences may correspond to respective different locations (element indices) in the specific sequence.

A plurality of CSI-RS sequences may be associated with a plurality of respective CSI-RS ports (Option 1). A plurality of CSI-RS sequences may be associated with a plurality of respective CDM groups (Option 2).

The base station / UE may generate a plurality of CSI-RS sequences from the one specific sequence generated based on a certain scrambling ID / cell ID / PCI.

The base station / UE may select elements of each CSI-RS sequence from the elements of the specific sequence in accordance with a selection rule. In accordance with the selection rule, a plurality of different start positions (element indices) of the elements in the specific sequence may be associated with a plurality of CSI-RS sequences (plurality of CSI-RS ports, plurality of CDM groups). When the CSI-RS sequence length is N, each CSI-RS sequence is constituted of N contiguous elements from the corresponding start position. For example, when the specific sequence length is M, the CSI-RS sequence length is N, and the start position is i, element indices in the specific sequence to be used for a CSI-RS sequence may be [i mod M, i + 1 mod M, ..., i + N mod M].

A parameter related to the selection rule may be defined in a specification or may be notified by higher layer signaling. The parameter related to the selection rule may be the start position for each CSI-RS sequence or an offset from the start position for a certain CSI-RS sequence to the start position for the next CSI-RS sequence. The offset may be fixed for all the CSI-RS sequences (a plurality of CSI-RSs may be selected from a plurality of respective start positions at regular intervals in the specific sequence).

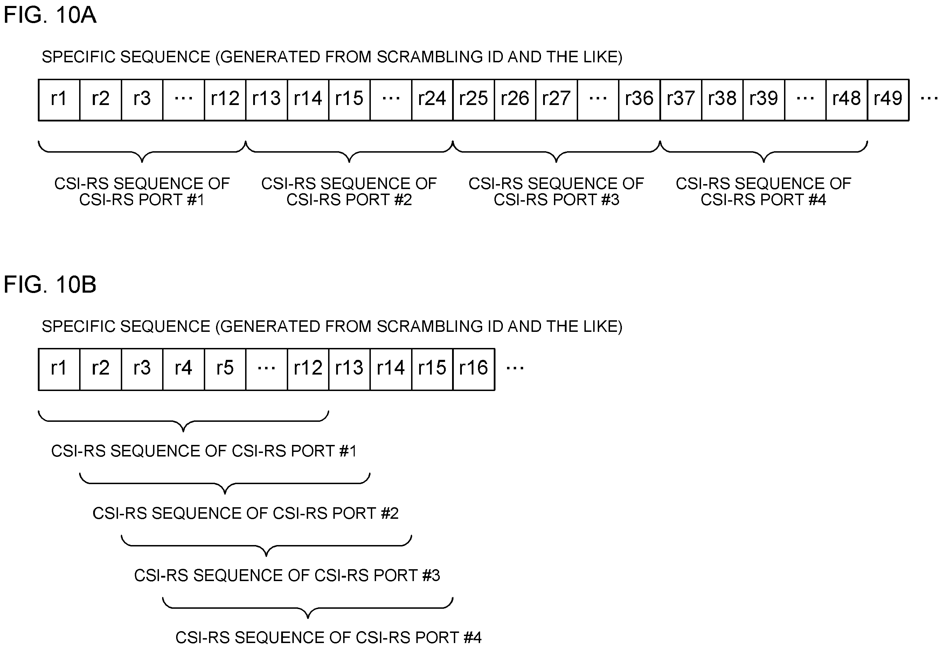

In the example in FIG. 10A, the CSI-RS sequence length and the number of CSI-RS ports are 12. In accordance with the selection rule, CSI-RS ports #1, #2, ..., #12 are associated with start positions (element indices) #1, #2, ..., #12, respectively. For example, a CSI-RS sequence [r1, r2, ..., r12] corresponding to CSI-RS port #1 is generated, and a CSI-RS sequence [r2, r3, ..., r13] corresponding to CSI-RS port #2 is generated, from the specific sequence [r1, r2, ...].

The offset in this example is +1.

In the example in FIG. 10B, the CSI-RS sequence length and the number of CSI-RS ports are 12. In accordance with the selection rule, CSI-RS ports #1, #2, ..., #12 are associated with start positions (element indices) #13, #25, ..., respectively. For example, a CSI-RS sequence [r1, r2, ..., r12] corresponding to CSI-RS port #1 is generated, and a CSI-RS sequence [r13, r14, ..., r24] corresponding to CSI-RS port #2 is generated, from the specific sequence [r1, r2, ...].

The offset in this example is sequence length (12).

The offset is not limited to these values. For example, the offset may be larger (or smaller) than the CSI-RS sequence length or may be a negative value.

A plurality of CSI-RS sequences may be generated from one specific sequence based on one scrambling ID. With this, no CSI-RS-port/CDM-group-specific scrambling IDs need be configured. Hence, overhead of notification for CSI-RS sequence generation, such as scrambling IDs, can be reduced.

<<Multiple-sequence Generation Method 2»

The base station / UE may generate a plurality of CSI-RS sequences by cyclic shifts of the specific sequence. The plurality of CSI-RS sequences may correspond to respective different cyclic shifts.

In the present disclosure, cyclic shift, cyclic shift amount, cyclic shift index, shift, and shift amount may be interchangeably interpreted.

A plurality of CSI-RS sequences may be associated with a plurality of respective CSI-RS ports (Option 1). A plurality of CSI-RS sequences may be associated with a plurality of respective CDM groups (Option 2).

The base station / UE may generate a plurality of CSI-RS sequences from the one specific sequence generated based on a certain scrambling ID / cell ID / PCI.

The base station / UE may perform cyclic shift of the specific sequence in accordance with a cyclic shift rule and thereby generate each CSI-RS sequence. In accordance with the selection rule, a plurality of different cyclic shift amounts may be associated with a plurality of respective CSI-RS sequences (plurality of CSI-RS ports, plurality of CDM groups). For example, when the specific sequence length is M and the cyclic shift amount corresponding to a CSI-RS sequence is S, the element with the element index i in the CSI-RS sequence may be the element with element index i + S mod M in the specific sequence.

A parameter related to the cyclic shift rule may be defined in a specification or may be notified by higher layer signaling. The parameter related to the cyclic shift rule may be the cyclic shift amount for each CSI-RS sequence or an offset from the cyclic shift amount for a certain CSI-RS sequence to the cyclic shift amount for the next CSI-RS sequence. The offset may be fixed for all the CSI-RS sequences (a plurality of CSI-RSs may be generated based on a plurality of respective cyclic shift amounts at regular intervals in the specific sequence).

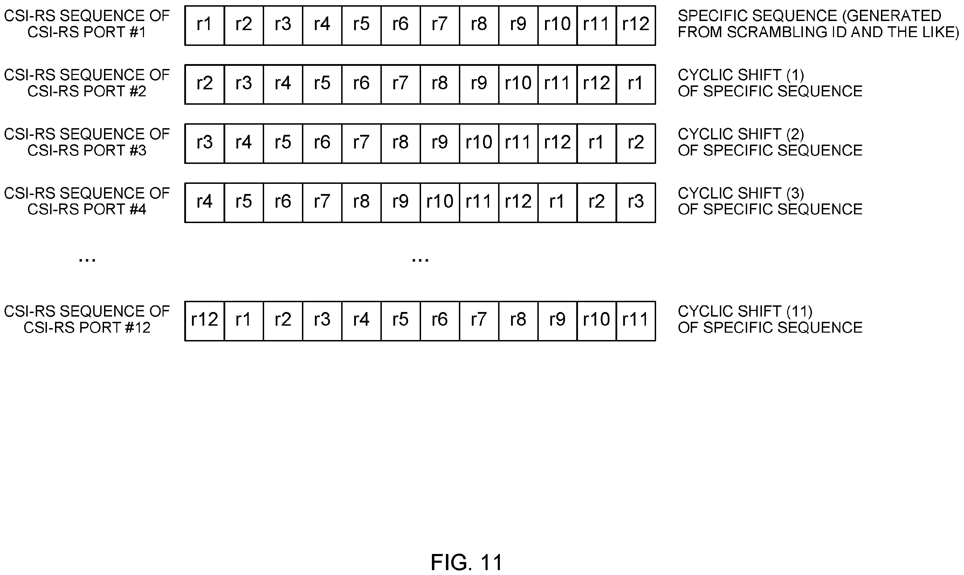

In the example in FIG. 11, the specific sequence length, the CSI-RS sequence length, and the number of CSI-RS ports are 12. In accordance with the cyclic shift rule, CSI-RS ports #1, #2, ..., #12 are associated with cyclic shift amounts 0, 1, ..., 11, respectively. One specific sequence (CSI-RS sequence corresponding to CSI-RS port #1) [r1, r2, ..., r12] is generated from one scrambling ID / cell ID / PCI. By using cyclic shift amount corresponding to each CSI-RS port, a CSI-RS sequence corresponding to the CSI-RS port is generated from the specific sequence. For example, a CSI-RS sequence [r2, r3, ..., r13] corresponding to CSI-RS port #2 is generated by using cyclic shift amount (1) corresponding to CSI-RS port #2.

The offset in this example is +1, but this is not restrictive. For example, the offset may be a value larger than 1 or may be a negative value.

A plurality of CSI-RS sequences may be generated from one specific sequence based on one scrambling ID. With this, no CSI-RS-port/CDM-group-specific scrambling IDs need be configured. Hence, overhead of notification for CSI-RS sequence generation, such as scrambling IDs, can be reduced.

According to this embodiment, it is possible to suppress interference among a plurality of cells and improve accuracy in CSI measurement.

<Embodiment 6>

The UE may measure/receive a CSI-RS in a band with a bandwidth equal to or larger than a specific bandwidth (specific value) (or larger than the specific bandwidth).

For example, as described above, when CSI-RSs of eight ports are used, the PN sequence length is 8. When the bandwidth used for CSI-RS measurement is one PRB, the number of patterns of the sequence with a length of 8 having {0, 1} as an element is only 256. Hence, the same PN sequence (CSI-RS sequence) may be generated using different scrambling IDs / cell IDs / PCIs in some cases. When the PN sequences are short, the possibility that highly correlated sequences are used among the plurality of cells is high even if the same PN sequence is not generated among the plurality of cells.

Even in a case where CSI-RSs of the same eight ports are used, the CSI-RS sequence length is long if the bandwidth in which the UE measures a CSI-RS is sufficiently larger than one PRB. For example, when CSI-RSs of eight ports are used in each PRB and the UE performs CSI-RS measurement by using 10 PRBs, the number of CSI-RS sequences is $2^{80}$ patterns, which is quite large. The possibility of having a high correlation of (or being completely identical among) $2^{80}$ CSI-RS sequences among a plurality of cells is quite low. Hence, when the bandwidth in which the UE measures a CSI-RS is equal to or larger than the specific bandwidth, interference among a plurality of cells can be reduced.

The UE may use reception signals of CSI-RSs in M PRBs (or M physical resource elements (PREs) or M subcarriers) or more to measure/report the CSI-RSs (such as CSIs or PMIs).

The value M may be defined in a specification or may be configured by higher layer signaling. The UE may report the value M to support (maximum value) as UE capability.

As the value M increases, the correlation of CSI-RS sequences among the plurality of cells decreases, but the processing load of the UE increases.

According to this embodiment, it is possible to suppress interference among a plurality of cells and improve accuracy in CSI measurement.

<Other Embodiments>

A higher layer parameter (RRC IE) / UE capability corresponding to a function (characteristics, feature) in each of the above embodiments may be defined. The UE capability may indicate to support this function.

The UE configured with the higher layer parameter corresponding to the function (enabling the function) may perform the function. The "UE not configured with the higher layer parameter corresponding to the function does not perform the function (for example, follows Rel. 15/16)" may be defined.

The UE that has reported the UE capability indicating support of the function may perform the function. The "UE that has not reported the UE capability indicating support of the function does not perform the function (for example, follows Rel. 15/16)" may be defined.

When the UE reports the UE capability indicating support of the function and a higher layer parameter corresponding to the function is configured, the UE may perform the function. "When the UE does not report the UE capability indicating support of the function or when the UE is not configured with the higher layer parameter corresponding to the function, the UE does not perform the function (for example, follows Rel. 15/16)" may be defined.

The UE capability may indicate whether the UE supports the function.

The UE capability may indicate whether to support generation of a sequence specific to a CSI-RS port. The UE capability may indicate whether to support generation of a sequence specific to a plurality of CSI-RS port groups (CDM groups).

The UE capability may indicate how many scrambling IDs (maximum number of scrambling IDs) the UE can be configured with (related to Embodiment 4).

The UE capability may indicate how many sequences the UE can generate from one scrambling ID (maximum number of sequences generated for one scrambling ID) (related to Embodiment 5).

The UE capability may indicate whether to support Embodiment 6.

According to such UE capability / higher layer parameter, the UE can achieve the above functions while maintaining compatibility with existing specifications.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

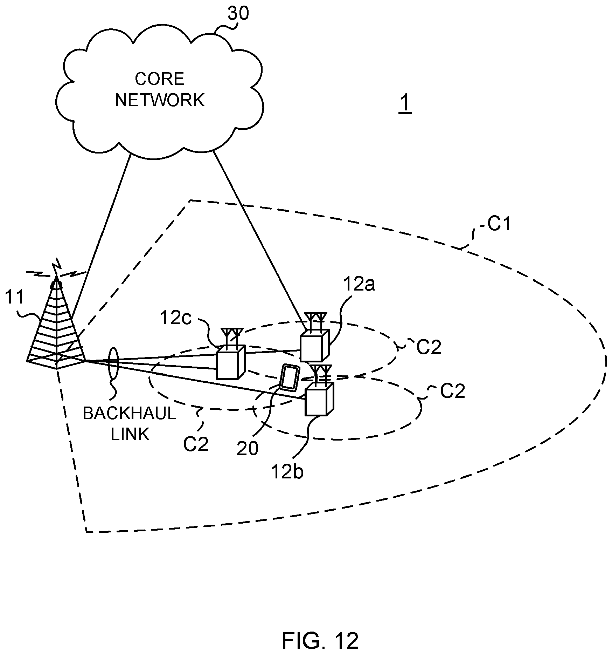

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

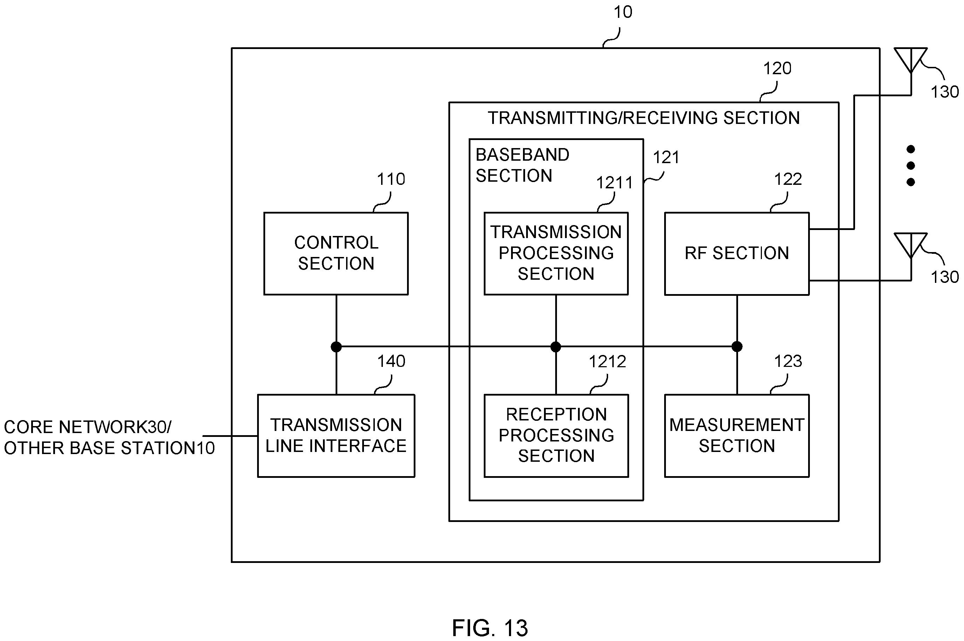

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may generate a channel state reference signal (CSI-RS) sequence among a plurality of CSI-RS sequences. The transmitting/receiving section 120 may transmit a CSI-RS by using the CSI-RS sequence. The plurality of CSI-RS sequences may correspond to a plurality of respective CSI-RS ports or a plurality of respective code division multiplexing (CDM) groups.

(User Terminal)

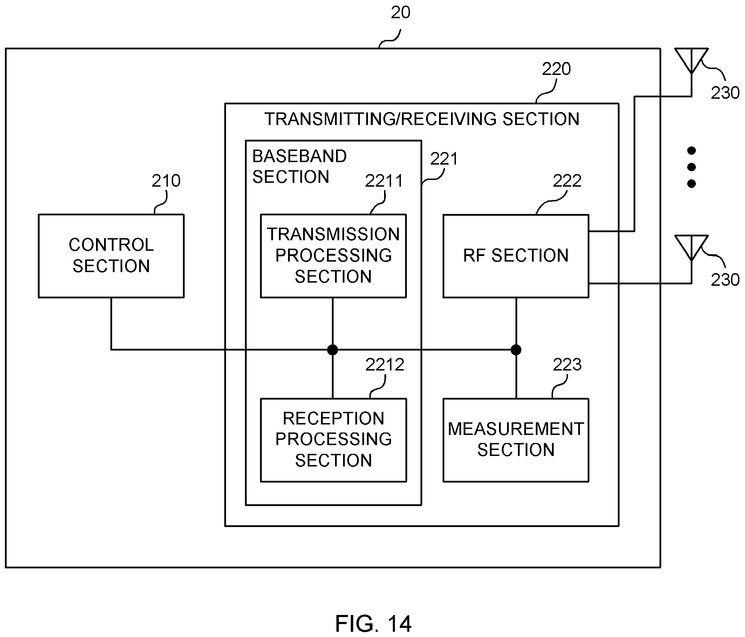

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may generate a channel state reference signal (CSI-RS) sequence among a plurality of CSI-RS sequences. The transmitting/receiving section 220 may receive a CSI-RS by using the CSI-RS sequence. The plurality of CSI-RS sequences may correspond to a plurality of respective CSI-RS ports or a plurality of respective code division multiplexing (CDM) groups.

The control section 210 may generate one specific sequence, based on one scrambling ID or one cell ID. The plurality of CSI-RS sequences may be obtained from a plurality of respective different locations in the one specific sequence.

The control section 210 may generate one specific sequence, based on one scrambling ID or one cell ID. The plurality of CSI-RS sequences may be obtained by a plurality of respective cyclic shifts in the one specific sequence.

The control section 210 may measure the CSI-RS by using a band with a bandwidth equal to or larger than a specific value. The specific value may be any of a value defined in a specification, a value notified by higher layer signaling, and a value reported by the terminal as capability information.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (separate apparatus), for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

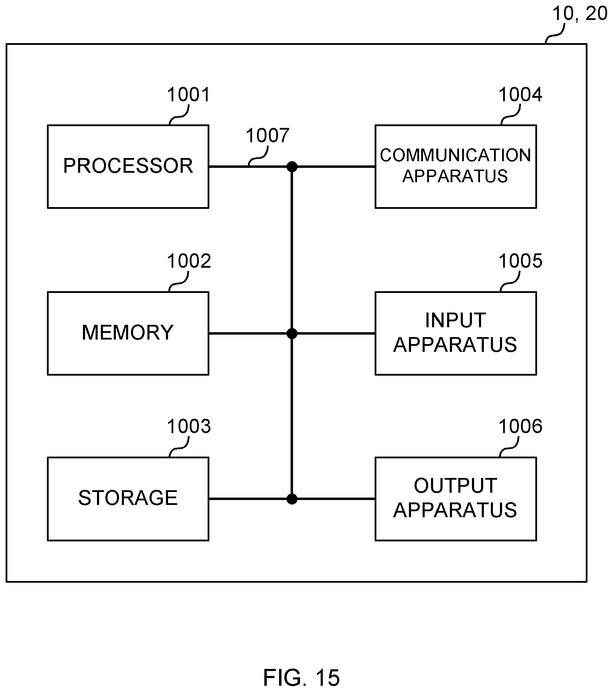

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that generates a channel state information reference signal (CSI-RS) sequence among a plurality of CSI-RS sequences; and
   a receiving section that receives a CSI-RS by using the CSI-RS sequence, wherein
   the plurality of CSI-RS sequences correspond to a plurality of respective CSI-RS ports or a plurality of respective code division multiplexing (CDM) groups.

2. The terminal according to claim 1, wherein

the control section generates one specific sequence, based on one scrambling ID or one cell ID, and
the plurality of CSI-RS sequences are obtained from a plurality of respective different locations in the one specific sequence.

3. The terminal according to claim 1, wherein

the control section generates one specific sequence, based on one scrambling ID or one cell ID, and
the plurality of CSI-RS sequences are obtained by a plurality of respective different cyclic shifts corresponding to the one specific sequence.

4. The terminal according to claim 1, wherein

the control section measures the CSI-RS by using a band having a bandwidth equal to or larger than a specific value, and
the specific value is any of a value defined in a specification, a value notified by higher layer signaling, and a value reported by the terminal as capability information.

5. A radio communication method for a terminal, the radio communication method comprising:

generating a channel state information reference signal (CSI-RS) sequence among a plurality of CSI-RS sequences; and
receiving a CSI-RS by using the CSI-RS sequence, wherein
the plurality of CSI-RS sequences correspond to a plurality of respective CSI-RS ports or a plurality of respective code division multiplexing (CDM) groups.

6. A base station comprising:

a control section that generates a channel state information reference signal (CSI-RS) sequence among a plurality of CSI-RS sequences; and
a transmitting section that transmits a CSI-RS by using the CSI-RS sequence, wherein
the plurality of CSI-RS sequences correspond to a plurality of respective CSI-RS ports or a plurality of respective code division multiplexing (CDM) groups.

## FIG. 1

| Row | Ports $x$ | Density $\rho$ | cdm-Type | $(k,l)$ | CDM group index $j$ | $k'$ | $l'$ |
|---|---|---|---|---|---|---|---|
| 1 | 1 | 3 | No CDM | $(k_0,l_0)$, $(k_0+4,l_0)$, $(k_0+8,l_0)$ | 0,0,0 | 0 | 0 |
| 2 | 1 | 1, 0.5 | No CDM | $(k_0,l_0)$, | 0 | 0 | 0 |
| 3 | 2 | 1, 0.5 | FD-CDM2 | $(k_0,l_0)$, | 0 | 0,1 | 0 |
| 4 | 4 | 1 | FD-CDM2 | $(k_0,l_0)$, $(k_0+2,l_0)$ | 0,1 | 0,1 | 0 |
| 5 | 4 | 1 | FD-CDM2 | $(k_0,l_0)$, $(k_0,l_0+1)$ | 0,1 | 0,1 | 0 |
| 6 | 8 | 1 | FD-CDM2 | $(k_0,l_0)$, $(k_1,l_0)$, $(k_2,l_0)$, $(k_3,l_0)$ | 0,1,2,3 | 0,1 | 0 |
| 7 | 8 | 1 | FD-CDM2 | $(k_0,l_0)$, $(k_1,l_0)$, $(k_0,l_0+1)$, $(k_1,l_0+1)$ | 0,1,2,3 | 0,1 | 0 |
| 8 | 8 | 1 | CDM4 (FD2,TD2) | $(k_0,l_0)$, $(k_1,l_0)$ | 0,1 | 0,1 | 0,1 |
| 9 | 12 | 1 | FD-CDM2 | $(k_0,l_0)$, $(k_1,l_0)$, $(k_2,l_0)$, $(k_3,l_0)$, $(k_4,l_0)$, $(k_5,l_0)$ | 0,1,2,3,4,5 | 0,1 | 0 |
| 10 | 12 | 1 | CDM4 (FD2,TD2) | $(k_0,l_0)$, $(k_1,l_0)$, $(k_2,l_0)$ | 0,1,2 | 0,1 | 0,1 |
| 11 | 16 | 1, 0.5 | FD-CDM2 | $(k_0,l_0)$, $(k_1,l_0)$, $(k_2,l_0)$, $(k_3,l_0)$, $(k_0,l_0+1)$, $(k_1,l_0+1)$, $(k_2,l_0+1)$, $(k_3,l_0+1)$ | 0,1,2,3 4,5,6,7 | 0,1 | 0 |
| 12 | 16 | 1, 0.5 | CDM4 (FD2,TD2) | $(k_0,l_0)$, $(k_1,l_0)$, $(k_2,l_0)$, $(k_3,l_0)$ | 0,1,2,3 | 0,1 | 0,1 |
| 13 | 24 | 1, 0.5 | FD-CDM2 | $(k_0,l_0)$, $(k_1,l_0)$, $(k_2,l_0)$, $(k_0,l_0+1)$, $(k_1,l_0+1)$, $(k_2,l_0+1)$, $(k_0,l_1)$, $(k_1,l_1)$, $(k_2,l_1)$, $(k_0,l_1+1)$, $(k_1,l_1+1)$, $(k_2,l_1+1)$ | 0,1,2,3,4,5, 6,7,8,9,10,11 | 0,1 | 0 |
| 14 | 24 | 1, 0.5 | CDM4 (FD2,TD2) | $(k_0,l_0)$, $(k_1,l_0)$, $(k_2,l_0)$, $(k_0,l_1)$, $(k_1,l_1)$, $(k_2,l_1)$ | 0,1,2,3,4,5 | 0,1 | 0,1 |
| 15 | 24 | 1, 0.5 | CDM8 (FD2,TD4) | $(k_0,l_0)$, $(k_1,l_0)$, $(k_2,l_0)$ | 0,1,2 | 0,1 | 0,1, 2,3 |
| 16 | 32 | 1, 0.5 | FD-CDM2 | $(k_0,l_0)$, $(k_1,l_0)$, $(k_2,l_0)$, $(k_3,l_0)$, $(k_0,l_0+1)$, $(k_1,l_0+1)$, $(k_2,l_0+1)$, $(k_3,l_0+1)$, $(k_0,l_1)$, $(k_1,l_1)$, $(k_2,l_1)$, $(k_3,l_1)$, $(k_0,l_1+1)$, $(k_1,l_1+1)$, $(k_2,l_1+1)$, $(k_3,l_1+1)$ | 0,1,2,3, 4,5,6,7, 8,9,10,11, 12,13,14,15 | 0,1 | 0 |
| 17 | 32 | 1, 0.5 | CDM4 (FD2,TD2) | $(k_0,l_0)$, $(k_1,l_0)$, $(k_2,l_0)$, $(k_3,l_0)$, $(k_0,l_1)$, $(k_1,l_1)$, $(k_2,l_1)$, $(k_3,l_1)$ | 0,1,2,3,4,5,6,7 | 0,1 | 0,1 |
| 18 | 32 | 1, 0.5 | CDM8 (FD2,TD4) | $(k_0,l_0)$, $(k_1,l_0)$, $(k_2,l_0)$, $(k_3,l_0)$ | 0,1,2,3 | 0,1 | 0,1, 2,3 |

FIG. 2A

| Index | $w_f(0)$ | $w_t(0)$ |
|---|---|---|
| 0 | 1 | 1 |

FIG. 2B

| Index | $[w_f(0) \quad w_f(1)]$ | $w_t(0)$ |
|---|---|---|
| 0 | $[+1 \quad +1]$ | 1 |
| 1 | $[+1 \quad -1]$ | 1 |

FIG. 2C

| Index | $[w_f(0) \quad w_f(1)]$ | $[w_t(0) \quad w_t(1)]$ |
|---|---|---|
| 0 | $[+1 \quad +1]$ | $[+1 \quad +1]$ |
| 1 | $[+1 \quad -1]$ | $[+1 \quad +1]$ |
| 2 | $[+1 \quad +1]$ | $[+1 \quad -1]$ |
| 3 | $[+1 \quad -1]$ | $[+1 \quad -1]$ |

FIG. 2D

| Index | $[w_f(0) \quad w_f(1)]$ | $[w_t(0) \quad w_t(1) \quad w_t(2) \quad w_t(3)]$ |
|---|---|---|
| 0 | $[+1 \quad +1]$ | $[+1 \quad +1 \quad +1 \quad +1]$ |
| 1 | $[+1 \quad -1]$ | $[+1 \quad +1 \quad +1 \quad +1]$ |
| 2 | $[+1 \quad +1]$ | $[+1 \quad -1 \quad +1 \quad -1]$ |
| 3 | $[+1 \quad -1]$ | $[+1 \quad -1 \quad +1 \quad -1]$ |
| 4 | $[+1 \quad +1]$ | $[+1 \quad +1 \quad -1 \quad -1]$ |
| 5 | $[+1 \quad -1]$ | $[+1 \quad +1 \quad -1 \quad -1]$ |
| 6 | $[+1 \quad +1]$ | $[+1 \quad -1 \quad -1 \quad +1]$ |
| 7 | $[+1 \quad -1]$ | $[+1 \quad -1 \quad -1 \quad +1]$ |

| # of ports | Freq. density (RE/RB/port) | Component resource (F, T) | CDM |
|---|---|---|---|
| 1 | 1/2, 1, 3 | N/A | N/A |
| 2 | 1/2, 1 | (2, 1) | FD2 |
| 4 | 1 | (4, 1) or (2, 2) | FD2 |
| 8 | 1 | (2, 1) or (2, 2) | FD2 |
| 8 | 1 | (2, 2) | FD2TD2 |
| 12 | 1 | (2, 1) | FD2 |
| 12 | 1 | (2, 2) | FD2TD2 |
| 16 | 1/2, 1 | (2, 2) | FD2, FD2TD2 |
| 24 | 1/2, 1 | (2, 2) or (2, 4) | FD2, FD2TD2 |
| 24 | 1/2, 1 | (2, 4) | FD2TD4 |
| 32 | 1/2, 1 | (2, 2) or (2, 4) | FD2, FD2TD2 |
| 32 | 1/2, 1 | (2, 4) | FD2TD4 |

FIG. 3

FIG. 4

FIG. 5

| Row | Ports $X$ | Density $\rho$ | cdm-Type | $(\bar{k},\bar{l})$ | CDM group index $j$ | $k'$ | $l'$ | scrambling ID offset |
|---|---|---|---|---|---|---|---|---|
| 1 | 1 | 3 | No CDM | $(k_0,l_0),\ (k_0+4,l_0),\ (k_0+8,l_0)$ | 0,0,0 | 0 | 0 | $y_0, y_1, y_2$ |
| 2 | 1 | 1, 0.5 | No CDM | $(k_0,l_0),$ | 0 | 0 | 0 | $y_0$ |
| 3 | 2 | 1, 0.5 | FD-CDM2 | $(k_0,l_0),$ | 0 | 0, 1 | 0 | $y_0,$ |
| 4 | 4 | 1 | FD-CDM2 | $(k_0,l_0),\ (k_0+2,l_0)$ | 0,1 | 0, 1 | 0 | $y_0, y_1$ |
| ... | ... | ... | ... | ... | ... | ... | ... | ... |

FIG. 6

## FIG. 7A

PN SEQUENCE    [r1, r2, r3, r4, r5, r6, r7, r8, r9, r10, r11, r12, ...]

CDM group #1    CDM group #2    CDM group #3

## FIG. 7B

PN SEQUENCE    [r1, r2, r3, r4, r5, r6, r7, r8, r9, r10, r11, r12, ...]

CELL #1    CDM group #1    CDM group #2    CDM group #3

CELL #2    CDM group #1    CDM group #3    CDM group #2

EP 4 322 651 A1

## FIG. 8A

CSI-RS SEQUENCE OF CSI-RS PORT #1 :  [r1, r2, r3, ... , r12]

CSI-RS SEQUENCE OF CSI-RS PORT #2 :  [r1, r2, r3, ... , r12]

...

CSI-RS SEQUENCE OF CSI-RS PORT #12 :  [r1, r2, r3, ... , r12]

GENERATED FROM ONE SCRAMBLING ID

## FIG. 8B

$k_0=0$, $k_1=4$, $k_2=8$, $l_0=3$

CDM GROUP #2

CDM GROUP #1

CDM GROUP #0

SUBCARRIER k

OFDM SYMBOL l

EP 4 322 651 A1

## FIG. 9A

CSI-RS SEQUENCE OF CSI-RS PORT #1 :  $[r\_1\_1, r\_1\_2, r\_1\_3, \dots , r\_1\_12]$  ⟵ GENERATED FROM SCRAMBLING ID #1

CSI-RS SEQUENCE OF CSI-RS PORT #2 :  $[r\_2\_1, r\_2\_2, r\_2\_3, \dots , r\_2\_12]$  ⟵ GENERATED FROM SCRAMBLING ID #2

...

CSI-RS SEQUENCE OF CSI-RS PORT #12 :  $[r\_12\_1, r\_12\_2, r\_12\_3, \dots , r\_12\_12]$  ⟵ GENERATED FROM SCRAMBLING ID #12

## FIG. 9B

SUBCARRIER k

$k_0=0, k_1=4, k_2=8, l_0=3$

CDM GROUP #2

CDM GROUP #1

OFDM SYMBOL l

CDM GROUP #0

EP 4 322 651 A1

## FIG. 10A

SPECIFIC SEQUENCE (GENERATED FROM SCRAMBLING ID AND THE LIKE)

| r1 | r2 | r3 | ⋯ | r12 | r13 | r14 | r15 | ⋯ | r24 | r25 | r26 | r27 | ⋯ | r36 | r37 | r38 | r39 | ⋯ | r48 | r49 | ⋯ |

CSI-RS SEQUENCE OF
CSI-RS PORT #1

CSI-RS SEQUENCE OF
CSI-RS PORT #2

CSI-RS SEQUENCE OF
CSI-RS PORT #3

CSI-RS SEQUENCE OF
CSI-RS PORT #4

## FIG. 10B

SPECIFIC SEQUENCE (GENERATED FROM SCRAMBLING ID AND THE LIKE)

| r1 | r2 | r3 | r4 | r5 | ⋯ | r12 | r13 | r14 | r15 | r16 | ⋯ |

CSI-RS SEQUENCE OF CSI-RS PORT #1

CSI-RS SEQUENCE OF CSI-RS PORT #2

CSI-RS SEQUENCE OF CSI-RS PORT #3

CSI-RS SEQUENCE OF CSI-RS PORT #4

EP 4 322 651 A1

FIG. 11

EP 4 322 651 A1

FIG. 12

FIG. 13

EP 4 322 651 A1

FIG. 14

EP 4 322 651 A1

FIG. 15

## INTERNATIONAL SEARCH REPORT

| International application No. |
| --- |
| **PCT/JP2021/014551** |

### A. CLASSIFICATION OF SUBJECT MATTER

*H04W 72/04*(2009.01)i
FI:  H04W72/04 134; H04W72/04 136

According to International Patent Classification (IPC) or to both national classification and IPC

### B. FIELDS SEARCHED

Minimum documentation searched (classification system followed by classification symbols)

H04B7/24-7/26, H04W4/00-99/00, H04L27/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-501393 A (LG ELECTRONICS INC) 16 January 2020 (2020-01-16) claims 1, 11, 12, paragraphs [0218]-[0281], fig. 4-8 | 1, 5, 6 |
| Y | | 4 |
| A | | 2, 3 |
| Y | JP 2020-509682 A (LG ELECTRONICS INC) 26 March 2020 (2020-03-26) paragraphs [0178]-[0219] | 4 |
| A | | 2, 3 |
| E, X | WO 2021/161540 A1 (NTT DOCOMO INC) 19 August 2021 (2021-08-19) claims 1, 2, 4, paragraphs [0045]-[0069], fig. 7A, 7B | 1, 2, 5, 6 |
| E, A | | 3, 4 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 November 2021** | **09 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/014551**

| Patent document cited in search report | | | Publication date (day/month/year) | Patent family member(s) | | | Publication date (day/month/year) |
|---|---|---|---|---|---|---|---|
| JP | 2020-501393 | A | 16 January 2020 | US | 2019/0215113 | A1 | |
| | | | | claims 1, 11, 12, paragraphs [0207]-[0270], fig. 4-8 | | | |
| | | | | WO | 2019/088694 | A1 | |
| | | | | EP | 3512148 | A1 | |
| | | | | KR | 10-2019-0049594 | A | |
| | | | | CN | 110892667 | A | |
| JP | 2020-509682 | A | 26 March 2020 | US | 2019/0074886 | A1 | |
| | | | | paragraphs [0184]-[0224] | | | |
| | | | | US | 2020/0162143 | A1 | |
| | | | | WO | 2019/031917 | A1 | |
| | | | | EP | 3471332 | A1 | |
| | | | | KR | 10-2019-0017701 | A | |
| | | | | KR | 10-2019-0138625 | A | |
| | | | | CN | 109891819 | A | |
| WO | 2021/161540 | A1 | 19 August 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010